# EUROPEAN PATENT APPLICATION

(11) **EP 1 411 029 A1**
(43) Date of publication of application: **21.04.2004**
(21) Application number: 01940594.3
(22) Date of filing: 15.06.2001
(51) Int. Cl.: C01B 17/04, B01D 53/52, B01D 53/86

(54) **CATALYTIC MEMBRANE REACTOR THAT IS USED FOR THE DECOMPOSITION OF HYDROGEN SULPHIDE INTO HYDROGEN AND SULPHUR AND THE SEPARATION OF THE PRODUCTS OF SAID DECOMPOSITION**

(71) Applicant: David Systems & Technology S.L., 28006 Madrid (ES)
(72) Inventor: BLACH VIZOSO, Ricardo, E-28006 Madrid (ES)
(74) Representative: Carpintero Lopez, Francisco
(86) International application number: PCT/ES2001/000244
(87) International publication number: WO 2002/102710

(57) **Abstract**

The reactor is comprised of a body, a tubular ceramic porous membrane element (2) placed coaxially inside it to remove the hydrogen, and a catalyst for the thermal breakdown of the hydrogen sulfide into sulfur and hydrogen, wherein said catalyst has been deposited directly on the tubular ceramic porous membrane element in the form of a layer. Applicable for treating gases containing hydrogen sulfide.

## Description

### FIELD OF THE INVENTION

The invention relates to treatment of gases containing hydrogen sulfide to break down the hydrogen sulfide into sulfur and hydrogen and separating these products with a catalytic membrane reactor having a porous ceramic membrane permeable to hydrogen, on which is deposited a catalyst suitable for decomposition of hydrogen sulfide into sulfur and hydrogen.

### BACKGROUND OF THE INVENTION

Various industrial processes lead to an undesired production of hydrogen sulfide, a product that is corrosive for pipes and equipment. Among these processes are oil refining processes using hydrogen gas, such as desulfurization of crude or various oil fractions by hydro-cracking, natural gas production processes, etc.

The usual treatment of residual hydrogen sulfide employs the Krauss process, which involves mutual reduction/oxidation of sulfur dioxide and hydrogen sulfide to produce water and elementary sulfur.

In addition, other methods have been developed for treating hydrogen sulfide oriented to producing hydrogen, a product that is useful as a source of non-polluting energy. These methods rely on the thermal breakdown of hydrogen sulfide in a reactor at 1900°C (US Patent 5,843,395) or catalytic breakdown of hydrogen sulfide in the presence of a. suitable catalyst, at a temperature between 450°C and 800°C (US Patent 4,039,613).

The complete breakdown of hydrogen sulfide into sulfur and hydrogen is a very difficult process. Conversion of hydrogen sulfide into sulfur and hydrogen depends on many factors, such as the temperature, the catalyst and the feeding rate of the breakdown products. The last factor is of great importance, as the breakdown reaction is reversible and the products can easily react with each other to form hydrogen sulfide.

In addition, other methods for treating hydrogen sulfide have been developed which combine the catalytic breakdown into sulfur and hydrogen and separation of hydrogen using a catalytic membrane reactor, so that it is possible to simultaneously lower the breakdown temperature of hydrogen sulfide and couple the breakdown and separation stages of the breakdown products.

Various membranes, both solid and porous, can be used to eliminate the hydrogen produced when the hydrogen sulfide breaks down in a catalytic membrane reactor. Solid metal membranes have the advantage that they allow only hydrogen through; however, their disadvantage is their low permeability. Porous membranes, on the other hand, have a high permeability but are much less selective and allow hydrogen and other products involved in the reaction to pass.

The catalytic membrane reactor developed by Edlund and Pledger (D. J. Edlund & W. A. Pledger, *J. of Membrane Science,* 77, 255-264, 1993) for catalytic breakdown of hydrogen sulfide into hydrogen and sulfur consists of a multiplayer membrane whose top layer (platinum) is meant for the catalytic breakdown of hydrogen sulfide, while its middle layer (vanadium) is used as a substrate permeable to hydrogen. However, this reactor has the disadvantage of using an expensive metal (platinum) as a catalyst and a low permeability of the membrane, so that it is necessary to recompress an input flow to 70-100 atm to increase the yield.

Kameyama et al. (T. Kameyama et al., *Int. J. Hydrogen Energy,* Vol. 8, N°1, 5-13, 1983) describe a catalytic membrane reactor for catalytic breakdown of hydrogen sulfide consisting of a cylindrical body and a tubular ceramic membrane disposed coaxially inside it. In this way the space between the membrane and the body is filled with an adequate catalyst, such as a transition metal sulfide, for example molybdenum sulfide; it is in this space where the hydrogen sulfide is broken down. The breakdown of hydrogen sulfide in this reactor takes place at 700°C-800°C. After the hydrogen sulfide breaks down the hydrogen is separated by the porous ceramic membrane, which contains a selective layer. However, the breakdown reaction and the separation of the hydrogen do not take place simultaneously, so that presence of hydrogen in the reaction area can inhibit the breakdown of the hydrogen sulfide.

### SUMMARY OF THE INVENTION

The invention addresses the problem of developing a catalytic membrane reactor useful for the catalytic breakdown of hydrogen sulfide and separation of the breakdown products, which solves all or some of the aforementioned drawbacks.

The solution provided by the invention is based on the observation that it is possible to simultaneously (i) break down catalytically hydrogen sulfide into hydrogen and sulfur, and (ii) separate the products of this breakdown with a porous ceramic membrane on which is deposited an adequate catalyst in the form of a layer. In this way, the catalytic breakdown of hydrogen sulfide takes place simultaneously with the separation of the hydrogen formed, so that the reaction is displaced in the desired direction.

A reactor such as that described in this description provides an improved breakdown of the hydrogen sulfide into sulfur and hydrogen as well as, simultaneously, a separation of the breakdown products. In addition, this reactor is economical, can be used effectively in an industrial level and increases the production of hydrogen.

The object of this invention is a catalytic membrane reactor for breaking down hydrogen sulfide and the separation of the. breakdown products, comprising a porous ceramic membrane on which is deposited an adequate catalyst in the form of a layer.
As additional object of the invention is a process for breaking down hydrogen sulfide and a simultaneous separation of the breakdown products, involving the use of the aforementioned reactor.

### BRIEF DESCRIPTION OF THE DRAWINGS

Figure 1 is a schematic representation of the reactor object of the present invention, which includes a single porous ceramic membrane element.
Figure 2 is a schematic representation of the reactor object of the present invention, which includes several parallel porous ceramic membrane elements.

### DETAILED DESCRIPTION OF THE INVENTION

The invention relates to a catalytic membrane reactor for breaking down hydrogen sulfide and separating the breakdown products, hereinafter referred to as the reactor of the invention, which includes a body, a tubular porous ceramic membrane disposed coaxially inside it to remove the hydrogen, and a catalyst for thermal breakdown of the hydrogen sulfide into sulfur and hydrogen, said catalyst being deposited directly on the tubular porous ceramic membrane in the form of a layer.

A characteristic of the reactor of the invention is that the catalyst, instead of being located inside the reactor, is disposed in the form of a thin layer or microlayer deposited on the tubular ceramic porous membrane. Thus, a cross sectional view of the assembly of the tubular ceramic porous membrane / deposited catalyst shows that said assembly has 3 layers, a first (bottom) porous ceramic layer, a second (middle) selective ceramic layer and a third (upper) catalytic layer.

The body of the reactor of the invention can adopt any suitable shape, such as cylindrical, and can be made of any suitable material resisting the working temperatures. The reactor body includes means for feeding the input gas (containing hydrogen sulfide) and means for outlet of hydrogen, sulfur and hydrogen sulfide that has not broken down.

The tubular ceramic porous membrane element is a tube-shaped element made from a ceramic porous membrane. The ceramic porous membrane used can be any conventional one, permeable to hydrogen but substantially impermeable to sulfur. For this purpose, the ceramic porous membrane includes a selective permeability layer that allows hydrogen to pass. In a specific embodiment, the tubular ceramic porous membrane element includes the said first ceramic porous layer and the said second selective ceramic layer. The porosity of these layers can vary within a wide range. In a specific embodiment, the said first layer can have a porosity between 1 and 2 µm, while the porosity of the second layer is less than 1 µm, for example 0.2 µm.

The tubular ceramic porous membrane element can be made of any suitable material, such as from any material conventionally used for manufacturing catalytic porous membranes for their use in catalytic membrane reactor for breaking down hydrogen sulfide. In a specific embodiment, the material used to manufacture the tubular ceramic porous membrane element includes α-aluminum oxide, which can be the material of the previously mentioned second layer or selective ceramic layer, and clay, which acts as a binder and/or plastifier. In a specific embodiment, said tubular ceramic membrane element is a tubular element made from Victor glass.

The catalyst deposited on the surface of the tubular ceramic porous membrane can be any conventional catalyst able to break down hydrogen sulfide catalytically, preferably at a temperature between 400°C and 700°C. In a specific embodiment the catalyst is a metal selected among transition elements, such as chromium, molybdenum, nickel, titanium, zirconium, etc., optionally as a derivative thereof such as a salt. In a specific embodiment, said catalyst is molybdenum sulfide and the thickness of the catalytic layer is up to 2 microns of molybdenum.

The catalyst can be deposited on the surface of the tubular ceramic porous membrane element by any conventional method, such as by deposition, spraying, impregnation or immersion n a solution or suspension containing said catalyst. More specifically, said catalyst can be deposited in the form of a thin layer with the sol-gel method (sol (liquid colloid) - gel (co-precipitate)) followed by fixation, or by precipitation of the vapor-gas phase (CVD), or by pyrolysis of the metallo-organic unions, or by strewing in magnetron and an arc.

The porosity of the catalyst layer (catalytic layer) can vary over a wide range. In a specific embodiment, the porosity of the catalytic layer is between 0.04 µm and 0.07 µm.

The reactor of the invention can include a single tubular ceramic porous membrane element or alternatively, in other specific embodiments, can include two or more parallel tubular ceramic porous membrane elements fitted in the rector body.

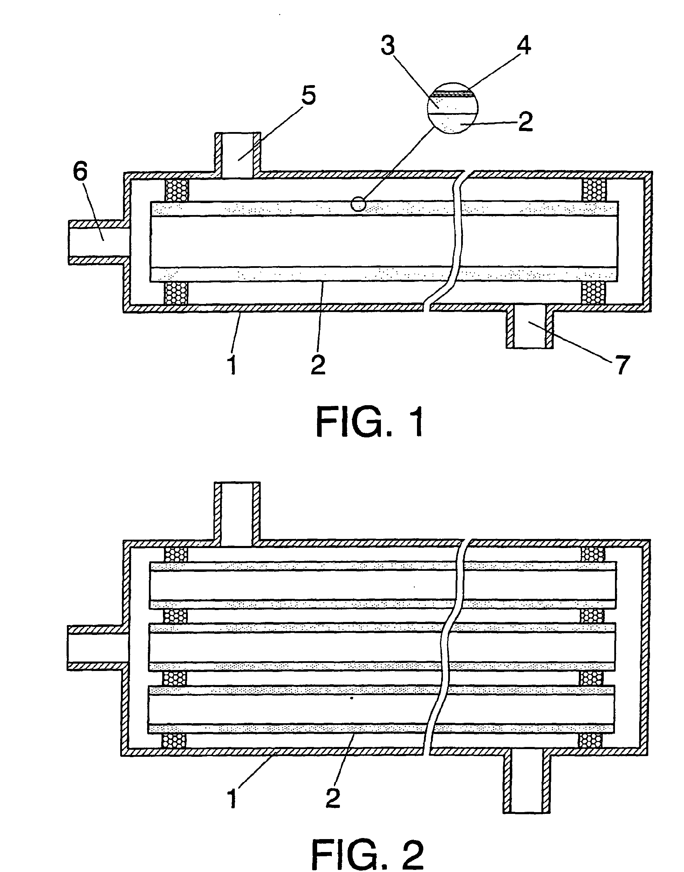

As can be better seen in Figure 1, the reactor of the invention consists of a body (1), a tubular ceramic porous membrane element (2) with a layer (3) selective to the passage of hydrogen, and a catalyst layer (4) deposited directly on the selective layer (3). The tubular ceramic porous membrane element is disposed coaxially inside the reactor body (1), so that the ends of the tubular ceramic porous membrane element (2) are hermetically isolated from the space between the body (1) and the outer wall of said tubular ceramic porous membrane element (2). The ends of the ceramic porous membrane element are attached either by the end or by a stuffing box type (shingled) union to the reactor body (1). The reactor body (1) also includes a duct (5) for inlet of the initial gas mixture and two ducts (6) and (7) for outlet of a flow of gases consisting of hydrogen and optionally part of the hydrogen sulfide which has not broken down, and for outlet of a flow containing the part of hydrogen sulfide which has not broken down. The reactor of the invention can also include a stuffing of a suitable material, such as graphite-graviflex.

The operation of the reactor of the invention is described in what follows. The initial gas, heated to a temperature between 400°C. and 700°C with a slight overpressure between 50.5-101 kPa (0.5-1 atm) travels inside the reactor of the invention through the duct (5). When it comes in contact with the catalyst layer (4) deposited on the outer surface of the tubular ceramic porous membrane element (2), the hydrogen sulfide breaks down into hydrogen and sulfur.

In the selective layer (3) of the tubular ceramic porous membrane (2) the hydrogen is directly separated from the sulfur and the hydrogen sulfide. The total effect of the separation of hydrogen from sulfur and hydrogen sulfide is determined by the contribution of the catalytic conversion and the contribution of a separation factor of a selective layer (3) of the tubular ceramic porous membrane element (2). The gas penetrating through the wall of the tubular ceramic porous membrane element (2), consisting of a mixture of hydrogen and the initial gas, is injected from the reactor through the duct (6). The gas that has not penetrated through the wall of the tubular ceramic porous membrane element (2), consisting of a mixture of the hydrogen sulfide that has not broken down and gaseous sulfur is injected to the exterior through the duct (7). The latter mixture of gases can be directed towards another reactor of the invention, so that this operation can be repeated as many times as required to achieve the total breakdown of the initial hydrogen sulfide. The total effect of the hydrogen sulfide breakdown and separation of the gas mixture that can be achieved in a single-step process is between 30% and 55% of the initial content of hydrogen sulfide in the gas fed to the reactor (depending, among other factors, on the temperature, flow and concentration of hydrogen sulfide).
By way of example, if the reactor of the invention acts on a gas with a hydrogen sulfide of approximately 4% with a flow rate per volume of initial gas of 1-100 hours⁻¹ and the catalyst applied is a sulfide of a transition metal previously prepared in an H₂S medium, the total conversion of hydrogen sulfide into hydrogen and sulfur will increase from 35% to 56%, depending on the temperature, in a single operation of the reactor of the invention. The catalytic effect known using only the same catalyst at temperatures between 400°C and 700°C at the same flow rate per volume of initial gas is no greater than 40% at best.

A characteristic of the reactor of the invention is the use of a catalyst deposited directly as a layer on an external selective layer of a tubular ceramic porous membrane element, thereby reducing considerably the amount of catalyst required, reducing the catalyst loss, eliminating the synthesis of catalyst pearls (required in other reactors) and elevating the total efficiency of the process. Eliminating hydrogen directly from the reaction area by the ceramic porous membrane displaces the equilibrium of the breakdown reaction in the desired direction. In this way a total effect of the breakdown and separation of the breakdown products is achieved directly from the reaction area, resulting in an increased efficiency in several forms of embodiment of the process.

Therefore, because of the simultaneous elimination of hydrogen from the catalytic reaction area the maximum extent of breakdown of hydrogen sulfide in the catalyst is reached at lower temperatures than in reactors known hitherto.

The invention also provides a process for breakdown of hydrogen sulfide into sulfur and hydrogen and separation of the breakdown products, hereinafter referred to as the process of the invention, involving the use of at least one reactor of the invention. The process includes feeding the reactor with the gas containing hydrogen sulfide heated to a temperature between 400°C and 700°C with a slight overpressure between 50.5 and 101 kPa (0.5 - 1 atm). Then the gas containing hydrogen sulfide travels inside the reactor of the invention and is placed in contact with the catalyst, which is deposited as a layer on the outer surface of the tubular ceramic porous membrane element, so that the hydrogen sulfide breaks down into hydrogen and sulfur. The hydrogen produced crosses the selective layer included in the tubular ceramic porous membrane element, from where it can be removed. The sulfur and hydrogen sulfide that has not broken down exit the reactor through ducts provided in the reactor for such purpose.

The process of the invention is suitable for treating gases containing hydrogen sulfide, preferably gases with a hydrogen sulfide content between 1 % and 96%.

The invention can be applied to oil refining, such as in processing "acid gases", processing gases, treating gases to remove hydrogen sulfide from mixtures containing it, treating gaseous exhaust with a high hydrogen sulfide content and in other industries related to breaking down hydrogen sulfide into hydrogen and sulfur, with a subsequent separation of the breakdown products.

As mentioned above, the conventional treatment of residual hydrogen sulfide employs the Klauss process, which involves mutual reduction/oxidation of the sulfur dioxide and hydrogen sulfide to produce water and elementary sulfur. However, this method is out of date for use in refineries as most refineries using sulfurous oil as raw material must find additional amounts of hydrogen (tens of thousands of cubic meters per hour) to carry out the hydrocleansing stage, after which the hydrogen sulfide is obtained. It is in this stage when the reactor of the invention is used advantageously, as it allows recovering the hydrogen created in the refinery hydrocleansing stage without power consumption for its manufacture.

## Claims

1. A catalytic membrane reactor for breaking down hydrogen sulfide into sulfur and hydrogen and separating the products of said breakdown, comprised of a body (1), a tubular ceramic porous membrane element (2) placed coaxially inside it to remove the hydrogen, and a catalyst for the thermal breakdown of the hydrogen sulfide into sulfur and hydrogen, **characterized in that** said catalyst has been deposited directly on the tubular ceramic porous membrane element in the form of a layer.

2. A reactor according to claim 1, **characterized in that** said tubular ceramic porous membrane element is comprised of a first porous ceramic later and a second selective ceramic layer.

3. A reactor according to claim 2, **characterized in that** the porosity of said first layer is between 1 and 2 µm.

4. A reactor according to claim 2, **characterized in that** the porosity of said second layer is under 1 µm.

5. A reactor according to claim 4, **characterized in that** the porosity of said second layer is 0.2 µm.

6. A reactor according to claim 1, **characterized in that** the material used to manufacture the tubular ceramic porous membrane element includes α-aluminum oxide and day.

7. A reactor according to claim 1, **characterized in that** the tubular ceramic porous membrane element is made from Vicor glass.

8. A reactor according to claim 1, **characterized in that** said catalyst is a metal, optionally in the form of a derivative thereof.

9. A reactor according to claim 8, **characterized in that** said metal is a transition metal.

10. A reactor according to claim 9, **characterized in that** said transition element is selected among chromium, molybdenum, nickel, titanium and zirconium.

11. A reactor according to claim 8, **characterized in that** said catalyst is molybdenum sulfide.

12. A reactor according to claim 1, wherein the porosity of the catalyst layer deposited on the tubular ceramic porous membrane element is up to 2 µm.

13. A reactor according to claims 1 and 11, wherein the porosity of the catalyst layer deposited on the tubular ceramic porous membrane element is between 0.04 and 0.07 µm.

14. A reactor according to any of the previous claims, **characterized in that** the body of said reactor contains two or more tubular ceramic porous membrane elements in parallel.

15. A process for the catalytic breakdown of hydrogen sulfide into sulfur and hydrogen and separation of the breakdown products, involving at least one reactor according to any of the claims 1 to 13.

16. A process according to claim 15, involving feeding said reactor with a gas containing hydrogen sulfide heated to a temperature between 400°C and 700°C at a pressure between 50.5 and 101 kPa (0.5-1 atm).
